Europäisches Patentamt

European Patent Office

Office européen des brevets

(11) Veröffentlichungsnummer : **0 352 647 B1**

# EUROPÄISCHE PATENTSCHRIFT

(12)

(45) Veröffentlichungstag der Patentschrift :
29.01.92 Patentblatt 92/05

(51) Int. Cl.⁵ : **B62B 3/02**

(21) Anmeldenummer : **89113396.9**

(22) Anmeldetag : **21.07.89**

---

(54) **Stapelbarer Transportwagen.**

---

(30) Priorität : **28.07.88 DE 3825597**

(43) Veröffentlichungstag der Anmeldung :
**31.01.90 Patentblatt 90/05**

(45) Bekanntmachung des Hinweises auf die
Patenterteilung :
**29.01.92 Patentblatt 92/05**

(84) Benannte Vertragsstaaten :
**DE FR GB IT**

(56) Entgegenhaltungen :
**EP-A- 0 267 817**
**DE-A- 3 619 569**
**FR-A- 2 420 468**
**GB-A- 2 052 399**

(73) Patentinhaber : **WANZL**
**METALLWARENFABRIK GMBH**
**Postfach 1129**
**W-8874 Leipheim (DE)**

(72) Erfinder : **Schmid, Johann**
**Flurstrasse 7**
**W-8949 Derndorf (DE)**
Erfinder : **Wanzl, Rudolf**
**Sonnenweg 8**
**W-8874 Leipheim (DE)**

## Beschreibung

Die Erfindung betrifft einen stapelbaren Transportwagen mit einer rückseitig angeordneten Schiebeeinrichtung und mit einem Fahrgestell, das wenigstens eine Ablagefläche für Stückgüter aufweist und das mit vier Lenkrollen und mit wenigstens einer Bockrolle ausgestattet ist, wobei sich die wenigstens eine Bockrolle zwischen den stirn- und rückseitig angeordneten Lenkrollen befindet und an einem anhebbar gelagerten Traggestell angeordnet ist.

Durch die europäische Patentschrift 0267817 ist ein derartiger Transportwagen bekannt. Bei diesem Transportwagen sind mittig zwei an einem Traggestell angeordnete Bockrollen so befestigt, daß deren Laufebene tiefer liegt, als die durch die übrigen vier Lenkrollen bestimmte Laufebene. Dies hat zur Folge, daß der Wagen, läßt man starke Bodenunebenheiten außer Betracht, normalerweise immer entweder mit den stirnseitigen Lenkrollen und den mittig angeordneten Bockrollen, oder mit diesen Bockrollen und den rückseitig angeordneten Lenkrollen fährt. Diese Rollenanordnung ist dann von Nutzen, wenn man ein seitliches Abdriften eines mit vier Lenkrollen ausgestatteten, insbesondere beladenen Transportwagens quer zu einer etwas geneigten Ebene verhindern will. Die Bockrollen, die immer mit dem Boden in Berührung stehen, schränken die Gefahr eines seitlichen Abdriftens ein. Der Transportwagen weist zwei Nachteile auf. Erstens vollführt er beim Fahren Nickbewegungen, die durch die unterschiedlich hohen Laufebenen der Rollen und aufgrund unebenen Bodens, ja sogar durch unterschiedlich starkes Schieben oder Ziehen des Transportwagens bewirkt werden. Zweitens läßt sich ein Stapel von ineinandergeschobenen Transportwagen sehr schlecht um Kurven lenken, da die Bockrollen nur geradeaus rollen können. Da die Transportwagen jedoch trotzdem in Stapeln bewegt werden müssen, kommt es in kurzer Zeit zu Abnützungserscheinungen an den Bockrollen.

Es ist ferner durch die US-Patentschrift 2,935,331 ein von Hand bewegbarer Transportwagen bekannt, der die eben erwähnten Nickbewegungen dadurch vermeidet, daß das mit einer Bockrolle ausgestattete Traggestell an der Unterseite des Fahrgestelles anhebbar gelagert ist. Dadurch ist das Traggestell imstande, allen Bodenunebenheiten auszuweichen, so daß immer alle vier Lenkrollen Bodenkontakt besitzen. Im Gegensatz zum Transportwagen gemäß der europäischen Patentschrift 0267817 läßt sich dieser Transportwagen jedoch nicht platzsparend mit weiteren gleichen Transportwagen zu einem Stapel ineinanderschieben. Auch wenn sich deshalb bei diesem Transportwagen das Problem des Abnützens der Bockrollen in Kurvenfahrten mangels Stapelfähigkeit nicht stellt, weist dieser Transportwagen die äußerst nachteilige Eigenschaft auf, daß er nicht mit gleichen Wagen platzsparend gestapelt werden kann und so bei Nichtgebrauch in größeren Stückzahlen enorm viel Stellplatz beansprucht.

Die Aufgabe der Erfindung besteht darin, einen Transportwagen der gattungsgemäßen Art so weiterzuentwickeln, daß dieser sich mit gleichen, zu einem Stapel ineinandergeschobenen Transportwagen in einer für die Bockrollen unschädlichen Weise, mühelos entlang von Kurvenbahnen bewegen läßt.

Die Aufgabe ist erfindungsgemäß dadurch gelöst, daß das Traggestell stirnseitig am Transportwagen befestigt ist und daß stirnseitig eine Anhebevorrichtung vorgesehen ist, die beim Ineinanderfahren zweier Transportwagen zum Anheben des Traggestelles des vorausbefindlichen Transportwagens bestimmt ist.

Der Vorteil der Erfindung besteht darin, daß die stirn seitig vorgesehene Anhebevorrichtung beim Vorgang des Ineinanderschiebens zweier Transportwagen das Traggestell des vorausbefindlichen Transportwagens so weit anhebt, daß die Bockrolle nicht mehr den Boden berührt. Mit Ausnahme des zuletzt in einen Stapel eingeschobenen Transportwagens rollen alle anderen vorausbefindlichen Transportwagen nur auf ihren Lenkrollen, so daß ein solcher Stapel mühelos entlang von Kurvenbahnen bewegbar ist. Die Bockrollen der im Stapel befindlichen Transportwagen werden daher nicht abgenützt. Auch die wenigstens eine Bockrolle des letzten Transportwagens erfährt keine Beschädigung, da diese, wie beim Fahren außerhalb eines Stapels imstande ist, sämtliche Kurvenbahnen mitzurollen.

Anhand der Zeichnungen wird ein bevorzugtes Ausführungsbeispiel näher erläutert. Es zeigt jeweils in Seitenansicht

Fig. 1 einen Transportwagen sowie
Fig. 2 zwei ineinandergeschobene Transportwagen.

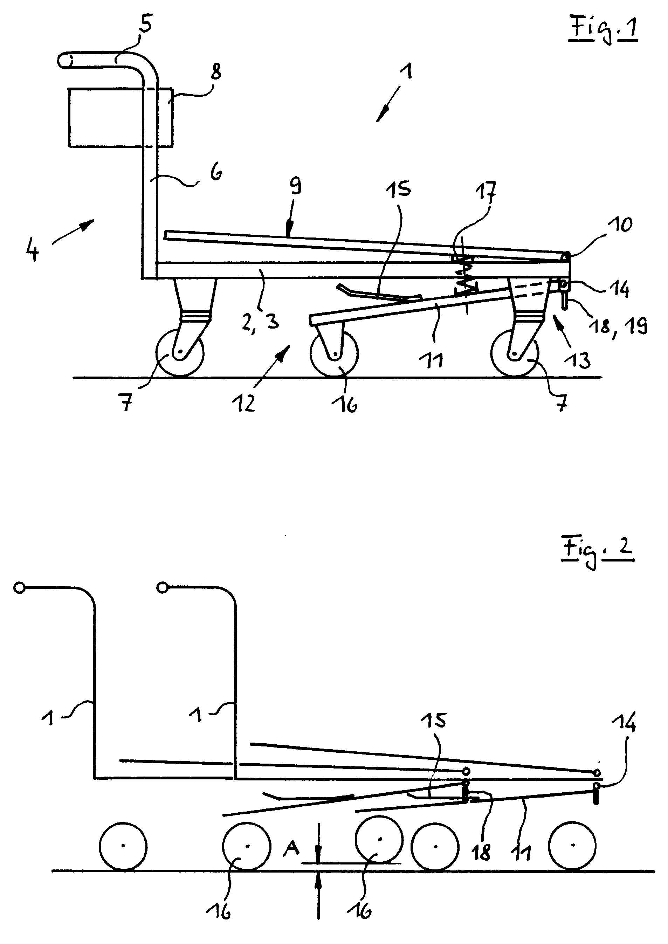

Der in Fig. 1 dargestellte Transportwagen 1 weist ein Fahrgestell 2 auf, an dessen rückseitigem Ende 4 eine Schiebeeinrichtung 5, beispielsweise in Form einer quer zur Schieberichtung verlaufenden Griffstange angeordnet ist. Nahe der Schiebeeinrichtung 5 kann beispielsweise ein Kleinware aufnehmender Korb 8 an aufrechten Pfosten 6, die zur Schiebeeinrichtung 5 führen, vorgesehen sein. Das Fahrgestell 2, das stirn- und rückseitig bevorzugt mit je zwei Lenkrollen 7 ausgestattet ist, weist eine Ablagefläche 9 in Form einer Ladeplatte auf, die in bekannter Weise so am Fahrgestell 2 befestigt ist, daß sie den Stapelvorgang der Transportwagen 1 nicht behindert. Im Beispiel ist die Ablagefläche 9 stirnseitig am Fahrgestell 2 um eine waagrechte Achse 10 verschwenkbar gelagert und durch Federkraft im unbelasteten Zustand in einer nach rückwärts leicht ansteigenden Lage gehalten. Unterhalb des Fahrgestellrahmens 3 befindet sich ein Traggestell 11, beispielsweise als U-förmiger Bügel gestaltet, das an seinem freien Ende 12 wenigstens eine Bockrolle 16 trägt. Das Traggestell 11 ist, wie gezeigt, mit seinen beiden freien Schenkeln 13 stirnseitig am Fahrgestellrahmen 3 oder an der Ablagefläche 9 um eine waagrechte Achse 14 begrenzt verschwenkbar gelagert. Am Traggestell 11 ist bevorzugt wenigstens eine Druckfeder 17 angeordnet, die sich am Traggestell 11 und am Fahrgestellrahmen 3 oder wie dargestellt, an der Unterseite der Ablagefläche 9 abstützt. Die wenigstens eine Druckfeder 17 drückt im Beispiel sowohl die Ablagefläche 9 leicht nach oben, als auch das Traggestell 11 nach unten. Zwischen der wenigstens einen Druckfeder 17 und der wenigstens einen Bockrolle 16 ist am Tragestell 11 ein schräg entgegen der Schieberichtung ansteigender, etwa bügelförmiger Vorsprung 15 vorgesehen. Ferner befindet sich stirnseitig eine beispielsweise durch einen U-Bügel gestaltete Anhebevorrichtung 18, die dazu bestimmt ist, beim Zusammenschieben zweier Transportwagen 1 unter den Vorsprung 15 eines vorausbefindlichen Transportwagens 1 zu greifen und diesen leicht nach oben zu drücken, so daß die wenigstens eine Bockrolle 16 vom Boden abgehoben wird. Die Anhebevorrichtung 18 ist mit ihren beiden Schenkeln 19 am Fahrgestellrahmen 3 angeschweißt. Damit die Transportwagen 1 ineinandergeschoben werden können, ist ihr Fahrgestellrahmen 3 in bekannter Weise von oben betrachtet etwa V-förmig gestaltet.

Fig. 2 zeigt schematisch dargestellt zwei ineinandergeschobene Transportwagen 1. Die Anhebevorrichtung 18 des in der Zeichnung links abgebildeten Transportwagens 1 hat den Vorsprung 15 des vorausbefindlichen, rechts dargestellten Transportwagens 1 untergriffen und leicht angehoben. Dadurch wird das Traggestell 11 des vorausbefindlichen Transportwagens 1 um die waagrechte Achse 14 etwas nach oben verschwenkt, so daß die wenigstens eine Bockrolle 16 vom Boden abgehoben ist (Maß A). Ein Stapel ineinandergeschobener Transportwagen 1 läßt sich somit leicht entlang von Kurvenbahnen bewegen.

## Patentansprüche

1. Stapelbarer Transportwagen (1), mit einer rückseitig angeordneten Schiebeeinrichtung (5) und mit einem Fahrgestell (2), das wenigstens eine Ablagefläche (9) für Stückgüter aufweist und das mit vier Lenkrollen (7) und mit wenigstens einer Bockrolle (16) ausgestattet ist, wobei sich die wenigstens eine Bockrolle (16) zwischen den stirn- und rückseitig angeordneten Lenkrollen (7) befindet und an einem anhebbar gelagerten Traggestell (11) angeordnet ist, dadurch gekennzeichnet, daß das Traggestell (11) stirnseitig am Transportwagen (1) befestigt ist und daß stirnseitig eine Anhebevorrichtung (19) vorgesehen ist, die beim Ineinanderfahren zweier Transportwagen (1) zum Anheben des Traggestelles (11) des vorausbefindlichen Transportwagens (1) bestimmt ist.

2. Stapelbarer Transportwagen nach Anspruch 1, dadurch gekennzeichnet, daß am Traggestell (11) ein Vorsprung (15) vorgesehen ist, der zum Untergreifen durch die Anhebevorrichtung (18) des rückwärtig in den vorausbefindlichen Transportwagen (1) einzuschiebenden Transportwagens (1) bestimmt ist.

3. Stapelbarer Transportwagen nach Anspruch 1 oder 2, dadurch gekennzeichnet, daß der Vorsprung (15) entgegen der Schieberichtung des Transportwagens (1) schräg ansteigt.

4. Stapelbarer Transportwagen nach einem der Ansprüche 1 bis 3, dadurch gekennzeichnet, daß der Vorsprung (15) bügelförmig gestaltet ist.

5. Stapelbarer Transportwagen nach einem der Ansprüche 1 bis 4, dadurch gekennzeichnet, daß die Anhebevorrichtung (18) durch einen U-Bügel gebildet ist, der mit seinen beiden Schenkeln (19) am Fahrgestellrahmen (3) befestigt ist

6. Stapelbarer Transportwagen nach einem der Ansprüche 1 bis 5, dadurch gekennzeichnet, daß das Traggestell (11) entweder am Fahrgestellrahmen (3) oder an der Ablagefläche (9) angelenkt ist.

## Claims

1. A stackable transport trolley (1) with a pushing arrangement (5) arranged at the rear and with a chassis (2) which has at least one loading surface (9) for piece goods and which is fitted with four caster wheels (7) and at least one support caster (16), wherein at least one support caster (16) is located between the caster wheels (7) arranged at the rear and at the front and is arranged on a support frame (11) mounted so as to be liftable, characterised in that the support frame (11) is fixed at the front to the transport trolley (1) and in that a lifting device (19) is provided at the front, which lifting device is intended for lifting the support frame (11) of the preceding transport trolley (1) when two transport trolleys (1) are pushed one inside the other.

2. A stackable transport trolley according to claim 1, characterised in that a projecting part (15) is provided on the support frame (11), which projecting part is intended for engagement from below by means of the lifting device (18) of the transport trolley (1) to be pushed from the rear into the preceding transport trolley (1).

3. A stackable transport trolley according to claim 1 or 2, characterised in that the projecting part (15) rises obliquely against the pushing direction of the transport trolley (1).

4. A stackable transport trolley (1) according to any one of claims 1 to 3, characterised in that the projecting part (15) is designed so as to be arcuate.

5. A stackable transport trolley according to any one of claims 1 to 4, characterised in that the lifting device (18) is formed by a U-bow which is fixed by its two arms (19) to the chassis frame (3).

6. A stackable transport trolley according to any one of claims 1 to 5, characterised in that the support frame (11) is hinged either to the chassis frame (3) or to the loading surface (9).

## Revendications

1. Chariot de transport (1) emboîtable, comprenant un dispositif de poussée (5) installé postérieurement, ainsi qu'un châssis de roulement (2) qui présente au moins une plate-forme (9) réceptrice de marchandises de détail, et est équipé de quatre roulettes directrices (7) et d'au moins une roulette (16) à chevalet fixe, chariot dans lequel la roulette (16) à chevalet fixe, prévue au minimum, est intercalée entre les roulettes directrices (7) disposées frontalement et postérieurement, et est implantée sur un châssis de support (11) monté avec faculté de soulèvement, caractérisé par le fait que le châssis de support (11) est fixé frontalement au chariot de transport (1) ; et par le fait qu'un dispositif de soulèvement (18) prévu frontalement est destiné, lors de l'interpénétration de deux chariots de transport (1), à soulever le châssis de support (11) du chariot de transport (1) précédent.

2. Chariot de transport emboîtable, selon la revendication 1, caractérisé par le fait qu'une protubérance (15) prévue sur le châssis de support (11) est destinée à être emprisonnée, par-dessous, par le dispositif de soulèvement (18) du chariot de transport (1) devant être poussé, postérieurement, dans le chariot de transport (1) précédent.

3. Chariot de transport superposable selon la revendication 1 ou 2, caractérisé par le fait que la protubérance (15) monte obliquement à l'opposé de la direction de poussée dudit chariot de transport (1).

4. Chariot de transport emboîtable, selon l'une des revendications 1 à 3, caractérisé par le fait que la protubérance (15) est conçue sous la forme d'un étrier.

5. Chariot de transport emboîtable, selon l'une des revendications 1 à 4, caractérisé par le fait que le dispositif de soulèvement (18) est formé par un étrier en U fixé, par ses deux branches (19), au cadre (3) du châssis de roulement.

6. Chariot de transport emboîtable, selon l'une des revendications 1 à 5, caractérisé par le fait que le châssis de support (11) est articulé soit sur le cadre (3) du châssis de roulement, soit sur la plate-forme réceptrice (9).

Fig. 1

Fig. 2